# EUROPÄISCHE PATENTSCHRIFT

(11) **EP 2 914 651 B1**
(45) Veröffentlichungstag und Bekanntmachung des Hinweises auf die Patenterteilung: **14.12.2016**
(21) Anmeldenummer: 13785459.2
(22) Anmeldetag: 31.10.2013
(51) Int. Cl.: C08J 7/04, B05D 5/08, H02K 3/44, H02K 1/27, H02K 3/30, H02K 3/32, H02K 3/38

(54) **SCHICHTSTRUKTUR AUF POLYMERBASIS MIT OLEOPHOB-HYDROPHOBER OBERFLÄCHE SOWIE ELEKTRISCHE MASCHINE MIT EINER SOLCHEN**
POLYMER-BASED LAYER STRUCTURE WITH AN OLEOPHOBIC/HYDROPHOBIC SURFACE, AND ELECTRIC MACHINE COMPRISING SUCH A LAYER STRUCTURE
STRUCTURE EN COUCHES À BASE POLYMÈRE PRÉSENTANT UNE SURFACE OLÉOPHOBE-HYDROPHOBE ET MOTEUR ÉLECTRIQUE COMPRENANT UNE TELLE STRUCTURE EN COUCHES

(30) Priorität: 02.11.2012 DE 102012021494
(43) Veröffentlichungstag der Anmeldung: 09.09.2015
(73) Patentinhaber: Volkswagen Aktiengesellschaft, 38440 Wolfsburg (DE)
(72) Erfinder: Behrendt, Reiner Nico, 38444 Wolfsburg (DE)
(86) Internationale Anmeldenummer: PCT/EP2013/072784
(87) Internationale Veröffentlichungsnummer: WO 2014/068041

(56) Entgegenhaltungen:
- EP-A2- 0 629 673
- EP-A2- 1 221 347
- WO-A1-2006/108814

## Beschreibung

Die Erfindung betrifft eine Schichtstruktur auf Polymerbasis mit oleophob-hydrophober Oberfläche zur Beschichtung, Abdichtung und/oder Verbinden technischer Bauteile oder Teilen von diesen, insbesondere als Vergussmasse für Wicklungen und/oder Schaltringe für solche oder als Verklebung von Magneten. Die Erfindung betrifft ferner eine elektrische Maschine, die eine solche Schichtstruktur aufweist, insbesondere als Vergussmasse für Wicklungen und/oder Schaltringe für solche oder als Magnetverklebung.

Polymere werden in der Technik vor allem als Vergussmassen für elektrische Maschinen, Leiterplatten oder elektrische Baugruppen, aber auch zur Verklebung und, beispielsweise in Form von Schutzlacken, als Beschichtung verwendet. Viele Materialgruppen der beteiligten Bauteile zeigen häufig Korrosions- beziehungsweise Aufquellerscheinungen beim Kontakt mit öligen und/oder wässrigen Lösungen. Ein Beispiel hierfür ist die sogenannte Kupferkorrosion, die häufig einsetzt, wenn elektrische und/oder elektronische Bauteile mit für die Funktionsweise notwendigen Medien in Verbindung kommen. Im Bereich der Verklebung treten hingegen insbesondere Probleme auf, wenn Feuchtigkeit zwischen die Kontaktbereiche von Polymer und Bauteil eindringt und dort zu Korrosion, Zersetzung und zum Aufquellen führt, was wiederum zu Zerstörung der Klebeverbindung und des Bauteils führen kann. Besonderes relevant sind derartige Probleme im Bereich elektrischer Maschinen.

Elektrische Maschinen (elektromechanische Wandler), beispielsweise elektrische Antriebsmotoren für Kraftfahrzeuge, Starter, Generatoren oder Starter-Generatoren, wandeln elektrische Energie in mechanische Energie (Motoren) beziehungsweise mechanische Energie in elektrische Energie (Generatoren) um. Diese elektromechanische Umwandlung beruht auf elektromagnetischer Induktion. Derartige elektrische Maschinen umfassen einen feststehenden Stator (Ständer), der nach einer häufigen Bauart einen Statorkern (Blechpaket) mit entsprechenden Drahtwicklungen und darauf angeordneten ein oder mehrere Schaltringe umfasst, sowie eine bewegliche Komponente, die bei dem häufigsten Bautyp als Rotor (Läufer) ausgebildet ist, welcher drehbar in oder um dem ringförmig ausgebildeten Stator gelagert ist und eine Vielzahl an Permanentmagneten aufweist. Dabei wird aufgrund des bewegten Magnetfeldes des Rotors ein Stromfluss in der Statorwicklung erzeugt (Generator) beziehungsweise aufgrund des durch den Stator erzeugten Magnetfeldes die mechanische Bewegung/Rotation des Rotors bewirkt (Motor). Umgekehrte Bautypen, bei denen der Rotor eine Wicklung und der Stator Magnete umfasst, sind ebenfalls bekannt.

Teile des, die Wicklung und den Schaltring aufweisenden Stators und/oder Rotors sind zum Zwecke ihrer elektrischen Isolation und ihres mechanischen Schutzes und des Schutzes gegenüber chemischen Einflüssen in einer Vergussmasse eingebettet. Die Vergussmasse wird insbesondere zur Einbettung des Schaltrings (auch als Verschaltungsring oder Kontaktbrücke bezeichnet) verwendet, welcher die Einzelwicklungen elektrisch miteinander verschaltet. Typischerweise basieren Vergussmassen auf einem Silikonkautschuk. Zur Erhöhung ihrer Wärmeleitfähigkeit enthalten diese Silikonelastomere häufig einen Zusatz hoher Füllstoffanteile, beispielsweise in Form von Quarzpartikeln. Derartige Materialien erfüllen die meisten der technischen Anforderungen an Vergussmassen, insbesondere weisen sie eine sehr geringe elektrische Leitfähigkeit auf, eine hohe Temperatur und Temperaturwechselbeständigkeit, eine hohe Wärmeleitfähigkeit, eine hohe Oxidationsstabilität, eine gute Untergrundhaftung sowie eine einfache Aushärtung und eine hohe Verarbeitungstoleranz. Problematisch ist jedoch die hohe Affinität der Silikone gegenüber Kohlenwasserstoffe. So zeigen sie die Neigung, Motoren- und Getriebeöle zu inkludieren und dadurch aufzuquellen. Durch die Quellung werden jedoch die mechanischen Eigenschaften beeinträchtigt. Beispielsweise nimmt die Festigkeit und Materialhärte ab, die Temperaturbeständigkeit sinkt und eine Ablösung und ggf. Versprödung der Vergussmasse kann die Folge sein. Insbesondere bei ölgekühlten Elektromotoren, die bauartbedingt mit Getriebeölen in Kontakt kommen, ist somit die Reduzierung oder Verhinderung der Ölaufnahme und -Quellung des Silikonmaterials wünschenswert.

Im Bereich der Magnetverklebung an Rotor oder Stator können eindringende Medien ebenfalls zu Problemen führen. Als Klebstoff für die Magnete kommen insbesondere Silikonharzsysteme zum Einsatz, die zum Teil mit Glaskugeln gefüllt werden, welche die Funktion von Abstandshaltern aufweisen und somit letztlich die Einstellung der Dicke des Kleberfilms ermöglichen. Die Magnetverklebung sollte grundsätzlich den gleichen technischen Anforderungen wie die Vergussmasse entsprechen (s.o.) und zusätzlich eine gute Klebewirkung aufweisen. Insbesondere sollte auch hier das verwendete Silikonharzsystem nicht durch Eindringen von Feuchtigkeit oder Ölen beeinträchtigt und die Haftfestigkeit herabgesetzt werden.

DE 31 33 734 C2 beschreibt eine elektrische Isolierung für einen Wickelkopf eines Stators oder Rotors einer elektrischen Maschine, die gleichzeitig vor Feuchtigkeit schützt. Die Beschichtung enthält einen Silikonkautschuk als Basismaterial, der anstelle eines mineralischen Füllmaterials stäbchenförmige Copolymere auf Basis von Styrol-Butylacrylat enthält.

Aus DE 10 2005 017 113 A1 ist eine zweischichtige Schutzschichtanordnung für einen Wickelkopf einer elektrischen Maschine bekannt, deren erste Schicht gelartig ausgebildet ist und insbesondere aus einem Silikongel besteht und deren zweite Schicht eine höhere Härte als die erste aufweist. Beide Schichten können aus einem Silikonkautschuk bestehen, die zweite Schicht alternativ aus einem Gießharz.

Daneben ist die wasserabweisende Wirkung von fluorhaltigen Verbindungen aus vielen technischen Bereichen bekannt. Beispielsweise werden Textilien mit PFTE beschichtet oder Fluorcarbonketten werden kovalent an die Fasern angebunden, um hydrophobe und gleichzeitig oleophobe Oberflächen zu erzeugen. Ebenfalls aus der Textilindustrie ist bekannt, hydrophobe Beschichtungen auf Basis von Silikonen und Fluorcarbonen auf die Textilien aufzubringen. Bei Synthetikfasern aus Polyolefinen oder Polyestern wird darüber hinaus auch die Gasphasenfluorierung angewendet, die eine aufwändige Kombination von Plasmabehandlung, Luftzufuhr, Pfropfen von Fluorcarbon-Monomeren und anschließend eine weitere Plasmabehandlung in CF₄-Atmosphäre erfordert (US 2011/045200A1).

US 5,416,373 beschreibt eine Wicklung eines Stators oder Rotors einer elektrischen Maschine, bei der die Wicklung mit einem elektrisch isolierenden Film oder mit einem Glimmmerband beschichtet ist. Im freiliegenden Wickelkopfbereich ist zusätzlich eine fluorhaltige Beschichtung aufgebracht, um die Wicklung gegen Feuchtigkeit zu schützen.

DE 10 2005 017 112 A1 (WO 2006/108814 A1) beschreibt ebenfalls eine zweischichtige Schutzschichtanordnung für einen Wickelkopf einer elektrischen Maschine. Die Schutzschichtanordnung umfasst eine erste, an die Leiteranordnung des Wickelkopfs angrenzende Schicht aus einem hochelastischen Silikongel sowie eine äußere Schicht, die ein Silikonkautschuk als Basismaterial enthält, dem feinkörnige oberflächenmodifizierte perfluorierte Verbindungen mit Korndurchmessern von etwa 10 nm zugesetzt sind. Die Beschichtung weist eine nanostrukturierte Oberfläche auf, die mit einer Mikrostruktur überlagert, und zeichnet sich durch eine starke Hydrophobizität mit Wasserkontaktwinkeln von mindestens 120° aus.

Der Erfindung liegt die Aufgabe zugrunde, eine polymerbasierte Schichtstruktur bereitzustellen, deren Oberfläche sowohl Feuchtigkeit als auch ölhaltige Substanzen abweist, das heißt sowohl hydrophob als auch oleophob ist, und dadurch Beeinträchtigungen ihrer Eigenschaften aufgrund Eindringens von Feuchtigkeit und/oder Ölen vermeidet. Das Material sollte insbesondere für elektrische Maschinen, Leiterplatten und elektronische Bauteile geeignet sein, beispielsweise als Vergussmasse von Wicklungen und/oder deren Verschaltungen und/oder als Verklebung beziehungsweise Schutzlack.

Diese Aufgabe wird durch eine Schichtstruktur auf Polymerbasis mit oleophop-hydrophober Oberfläche sowie eine elektrische Maschine mit einer solchen mit den Merkmalen der unabhängigen Ansprüche gelöst.

Somit betrifft ein erster Aspekt der Erfindung eine Schichtstruktur auf Polymerbasis mit oleophob-hydrophober Oberfläche zur Beschichtung, Abdichtung und/oder zum Verbinden technischer Baugruppen oder Teilen von diesen, umfassend
- eine erste, ein Polymer umfassende Schicht,
- eine zweite, an die erste Schicht angrenzende Schicht, umfassend ein Polymer sowie, in dem Polymer verteilte, ein Fluorpolymer umfassende Partikel sowie
- eine äußere, an die zweite Schicht angrenzende Schicht, die eine Fluorcarbonverbindung mit zumindest einer funktionellen Gruppe umfasst, und optional in der Fluorcarbonverbindung verteilte, ein Fluorpolymer umfassende Partikel umfasst.

Durch die reaktiven Gruppen der Fluorcarbonverbindung der äußeren Schicht, wird einerseits eine oleophobe (ölabweisende) Oberfläche erzeugt. Durch die Fluorcarbonabschnitte dieser Verbindung zusammen mit dem Polymergrundmaterial der unteren Schichten wird gleichzeitig eine starke Hydrophobizität (wasserabweisende Wirkung) erzielt. Die Fluorpolymerpartikel der zweiten Schicht und gegebenenfalls der äußeren Schicht weisen zweierlei Funktionen auf. Erstens dienen sie als Haftvermittler zwischen der ersten Polymerschicht und der äußeren Schicht. Zweitens führen die Partikel zu einer entsprechenden Strukturierung der Oberfläche, insbesondere einer Nanostruktur, durch welche sowohl die Oleophopie, als auch die Hydrophobie verstärkt werden.

Vorzugsweise handelt es sich bei dem Polymer der ersten und/oder der zweiten Schicht um ein Polymer aus der Gruppe der Thermoplasten, der Elastomere, der thermoplastischen Elastomere und der Duroplasten. Aus der Gruppe der Duroplasten sind insbesondere Epoxidharze, aber auch ungesättigte Polyester, Melamin-Harze, Phenol-Formaldehydharze, Harnstoff-Formaldehyd-Harze, Polyurethane und Polyisocyanureate bevorzugt, da diese insbesondere im Bereich der Klebeverbindung technischer Bauteile Verwendung finden. Unter den Elastomeren sind die Silikone besonders bevorzugt. Diese sind im Bereich der Vergussmassen relevant. Überdies finden aber auch Fluorsilikone, Polyurethane, Styrol-Butadien-Kautschuke, Polyvinylbutyrat, Polyisobutylen, Naturkautschuk, Polyisopren, Methacrylat-Butadien-Styrol-Copolymerisate, Fluorkautschuke, Ethylenvinylacetat, Ethylen-Propylen-Copolymere, Ethylen-Propylen-Dien-Copolymere, Ethylen-Ethylacrylat-Copolymere, Butylkautschuke, Butadien-Kautschuk, Acrylnitril-Butadien-Acrylat-Copolymere und Acrylnitril-Methylmethacrylat-Copolymere als Elastomere Verwendung und werden daher in dem erfindungsgemäßen Schichtaufbau bevorzugt. Aufgrund ihrer Relevanz in der Technik, insbesondere der Fahrzeugtechnik, sind darüberhinaus thermoplastische Elastomere (TPE), wie thermoplastisches Polyurethan, Styrol-Butadien-Styrol-Copolymere, Polyether-block-Amide im Rahmen der Erfindung mit Vorteil einsetzbar. Geeignete thermoplastische Materialien umfassen Polyphenylensulfid, Polyphenylensulfon, Polyethersulfon, Polysulfon, Styrol-Acrylnitril-Copolymere, thermoplastische Stärke, Polyvinylpyrrolidon, Polyvinylchlorid, Polyvinylacetat, Polytrimethylenterephthalat, Polystyrole, High-Impact-Polystyrole, Polyolefine, wie Polymethylpenten, Polypropylene und Polyethylene, Polypyrrole, Polyamide, Polyphthalamide, Polyphenylenether, Polyoxymethylen, Polyacrylate, Polyacrylnitril, Polyimide, Polyamidimide, Polyesterimide, Polyesteramide, Polybenzimidazole, Polymethacrylimide, Polymethacrylmethylimid, Polylactid, Polyhydroxybutyrat, Polyester wie Polyethylentherephthalat und Polybutylentherephthalat, Polyetherketon, Polyetheretherketone, Polyetherimid, Polycarbonate, Polycaprolacton, Polybutylensuccinat, Perfluoralkoxyalkane sowie deren Copolymere, Cycloolefin-Copolymere, Acrylnitril-Butadien-Styrol-Copolymere, Acrylat-Styrol-Acrylnitril-Copolymere.

Die Fluorcarbonverbindung der äußeren Schicht ist gemäß einer bevorzugten Ausgestaltung ein Fluoralkylsiloxan. Hierbei handelt es sich um eine trifunktionelle organische Verbindung, genauer um ein durch Fluoralkylgruppen, und gegebenenfalls Aminoalkylgruppen, funktionalisiertes Oligosiloxan. Der besondere Vorteil gegenüber anderen Fluorcarbonverbindungen liegt darin, dass es, zusätzlich zu den oleophoben Eigenschaften der Verbindung, unter Ausbildung von Si-O-Bindungen und nachfolgender Quervernetzung zu chemischen Reaktionen mit der Oberfläche der zweiten Schicht kommt, wodurch sich eine besonders gute Verbindung zwischen Polymer und Oleophobierungsmittel herausbildet.

In einer besonders vorteilhaften Ausführung der Erfindung hat sich die Verwendung von Tridecafluorooctyltriethoxysiloxan als Fluoralkylsiloxan in der äußeren Schicht erwiesen. Diese Verbindung ist insbesondere für die Produktion sehr gut geeignet, da sie zum einen sehr gute Haftungs- und Oleophobierungseigenschaften zeigt zudem aber auch ungiftig und damit mit wenig Aufwand verarbeitbar ist.

In einer alternativen Ausgestaltung handelt es sich bei den funktionellen Gruppen um polare und/oder ionische Gruppe. Diese erhöhen insbesondere den oleophoben Charakter der Fluorcarbonverbindung.

Vorzugsweise handelt es sich bei der Fluorcarbonverbindung der äußeren Schicht um ein Fluortensid, insbesondere ein ionisches Fluortensid. Fluortenside umfassen einerseits kurze bis mittellange teil- oder perfluorierte Kohlenstoffketten, welche einen hydrophoben Charakter aufweisen. Andererseits weisen Fluortenside eine polare, insbesondere ionische Gruppe in vorzugsweise terminaler Position auf, welche der Verbindung den gewünschten oleophoben Charakter verleiht. Bevorzugte Kettenlängen der hydrophoben teil- oder perfluorierten Kohlenstoffkette liegen im Bereich von 2 bis 40 C-Atomen, insbesondere von 4 bis 30 C-Atomen, vorzugsweise von 5 bis 15 C-Atomen.

In bevorzugter Ausgestaltung der Erfindung ist das Fluortensid ausgewählt aus der Gruppe umfassend teil- oder perfluorierte Phosphorsäureester, umfassend Mono-, Di- und Triester der Phosphorsäure und Di- und Triphosphorsäureester; teil- oder perfluorierte Phosphonsäureester, umfassend Mono- und Diester der Phosphonsäure, und Di- und Triphosphonsäureester; teil- oder perfluorierte Sulfonsäuren; teil- oder perfluorierte Schwefelsäureester; teil- oder perfluorierte Carbonsäuren; sowie Oligomere oder Telomere, Salze und Mischungen der vorgenannten Verbindungen.

In einer besonders vorteilhaften Ausführung der Erfindung hat sich als Fluortensid ein teilfluorierter, vorzugsweise unverzweigter C2- bis C40-Phosphorsäurealkylester herausgestellt. Besonders gute Ergebnisse wurden mit einer solchen Verbindung erzielt, die aus der chemischen Reaktion von 1H,1H,2H,2H-Perfluor-1-oktanol und Phosphorpentoxid erhalten wurde, oder einem Salz von diesem Produkt. Bei dem Reaktionsprodukt handelt es sich vermutlich um eine Mischung aus dem entsprechenden Mono- und Dioktylester der Phosphorsäure sowie Diphosphorsäureoktylester. Vorzugsweise wird ein Ammoniumsalz dieses Reaktionsprodukts eingesetzt.

Bevorzugte Flächengewichte der Fluorcarbonverbindung liegen im Bereich von 0,01 bis 1,0 g/cm² Oberfläche, insbesondere von 0,1 bis 0,5 g/cm². Unterhalb dieser Grenzen ist die oleophobe Wirkung der Verbindung zu schwach ausgeprägt. Flächengewichte oberhalb dieser Grenzen führen hingegen zu keiner nennenswerten Verstärkung der Oleophobizität. Zudem wird bei höheren Flächengewichten, die durch die Partikel der zweiten Schicht erzeugte Oberflächenstruktur zunehmend nivelliert.

Mit Vorteil kann die äußere Schicht ein Binde- oder Netzmittel umfassen, wodurch einerseits die Stabilität der äußeren Schicht erhöht und andererseits ihre Benetzung auf der zweiten, polymerhaltigen Schicht verbessert wird. In bevorzugter Ausgestaltung kann ein Binde- oder Netzmittel auf Acrylatbasis verwendet werden.

Vorzugsweise enthält die äußere Schicht, ebenso wie die zweite Schicht, Partikel eines Fluorpolymers. Vorzugsweise handelt es sich bei dem Fluorpolymer der Partikel der zweiten und/oder der äußeren Schicht unabhängig voneinander um ein teil- oder perfluoriertes Kohlenwasserstoffpolymer, wobei perfluorierte Verbindungen bevorzugt sind. Insbesondere ist das das Fluorpolymer ausgewählt aus Polytetrafluorethylen (PTFE), Polyvinylidenfluorid (PVDF) oder deren Mischungen. Diese Materialien zeichnen sich bekanntermaßen durch eine sehr hohe mechanische und chemische Stabilität aus und weisen darüber hinaus hydrophobe Eigenschaften auf, wodurch die Wasseraufnahme der Beschichtung reduziert wird.

Zur Erzeugung einer entsprechend vorteilhaften nano- und mikrostrukturierten Oberfläche eignen sich Partikel mit mittleren Teilchendurchmessern im Bereich von 50 bis 10.000 nm (0,05-10 µm), insbesondere von 100 bis 7.500 nm (0,1-7,5 µm). Mit besonderem Vorteil können auch Mischungen unterschiedlicher Teilchendurchmesser verwendet werden, um eine mikrostrukturierte Oberfläche zu erzeugen, der eine Nanostrukturierung überlagert ist.

Ein Massenanteil der Fluorpolymerpartikel in der zweiten und/oder der äußeren Schicht liegt insbesondere im Bereich von 1 bis 40 Gew.-%, vorzugsweise von 5 bis 30 Gew.-%, jeweils bezogen auf die Gesamtmasse der jeweiligen Schicht. Beispielsweise beträgt der Massenanteil der Fluorpolymerpartikel in der zweiten und/oder der äußeren Schicht 10 bis 20 Gew.-%.

Überraschenderweise hat sich herausgestellt, dass eine Zubereitung solcher Fluorpolymerpartikel in einer Lösung der, insbesondere polaren und/oder ionischen Fluorcarbonverbindung der äußeren Schicht eine transparente Lösung ergibt. Dies deutet daraufhin, dass das Fluorpolymer, beispielsweise PTFE, in Lösung geht oder zumindest sehr gut dispergiert wird. Bei der Trocknung des äußeren Films depolymerisiert oder verdampft das Lösungsmittel bzw. Netzmittel, so dass das Fluorpolymer wieder ausfällt und sich Partikel zurückbilden. Hierdurch bildet sich eine Art Lotuseffekt aus. Das teilweise Anlösen der Partikel durch die äußere Schicht trifft auch auf die Fluorpolymerpartikel der zweiten Schicht zu, welche sich an der äußeren Grenzschicht zur äußeren Schicht finden. Auf diese Weise wird die Haftung zwischen der zweiten und der äußeren Schicht noch weiter verbessert.

Nach einer bevorzugten Ausgestaltung der Erfindung umfasst das Polymer der ersten und/oder der zweiten Schicht ein Silikon, insbesondere einen Silikonkautschuk, wobei es sich vorzugsweise um solche aus der Gruppe der Methylpolysiloxan-Kautschuke (MQ) handelt. Derartige Silikonkautschuke finden bereits heute vielfach Anwendung in Vergussmassen von elektrischen Maschinen, beispielsweise für deren Wickelköpfe und/oder Schaltringe. Insbesondere Vinylmethyl-Polysiloxan-Kautschuke (VMQ), Phenylvinylmethyl-Polysiloxan-Kautschuke (PVMQ) oder deren Mischungen zeichnen sich durch sehr vorteilhafte thermische und elektrische Eigenschaften in diesem Bereich aus.

Sofern die Schichtstruktur zur Verklebung von Bauteilen dienen soll, beispielsweise zur Verklebung von Magneten elektrischer Maschinen, wird als Polymer der ersten und/oder der zweiten Schicht vorzugsweise ein Silikonkleber verwendet, insbesondere ein additionsvernetztes Silikonharz. Derartige Silikonharze befinden sich bereits heute in Verwendung zur Magnetverklebung in elektrischen Maschinen.

Eine besonders gute Haftung zwischen der ersten und der zweiten Schicht wird erzielt, wenn beide Schichten chemisch ähnliche oder identische Polymere, insbesondere Silikone, enthalten. In diesem Fall ist nicht nur die chemische Verträglichkeit gewährleistet, sondern auch eine ähnliche bzw. identische thermische Ausdehnung der beiden Polymerschichten.

Je nach Anforderung kann die erste Schicht einen Füllstoff umfassen. Hier kommen insbesondere Partikel, Kugeln oder Hohlkugeln in Frage. Vorzugsweise bestehen diese aus Quarz, Glas, Aluminiumoxid, Bornitrit, Graphit oder Metall. Beispielsweise kann in Vergussmassen basierend auf Silikonkautschuk durch einen Zusatz von Quarzpartikeln die Wärmeleitfähigkeit erhöht werden. Glas- oder Quarzkugeln oder -hohlkugeln, können zudem die Funktion von Abstandshaltern erfüllen, um gewünschte Kleberschichtdicken zu erhalten.

In einer bevorzugten Ausgestaltung der Erfindung ist die Schichtstruktur auf Silikonbasis ausgebildet und umfasst:
- eine erste, ein Silikon umfassende Schicht,
- eine zweite, an die erste Schicht angrenzende Schicht, umfassend ein Silikon sowie, in dem Silikon verteilte, ein Fluorpolymer umfassende Partikel sowie
- eine äußere, an die zweite Schicht angrenzende Schicht, die eine Fluorcarbonverbindung mit zumindest einer polaren und/oder ionischen Gruppe umfasst, und optional in der Fluorcarbonverbindung verteilte, ein Fluorpolymer umfassende Partikel umfasst.

Ein weiterer Aspekt der vorliegenden Erfindung betrifft eine elektrische Maschine, die einen Stator und einen Rotor umfasst, wobei der Stator und/oder der Rotor Wicklungen und/oder Permanentmagnete umfasst. Dabei weist die erfindungsgemäße elektrische Maschine im Bereich der Wicklungen und/oder im Bereich der Schaltringe zur elektrischen Verschaltung der Wicklungen und/oder als Magnetverklebung eine oleophop-hydrophope Schichtstruktur gemäß der vorliegenden Erfindung auf. Insbesondere im Falle ölgekühlter elektrischer Motoren, die bauartbedingt mit Ölen in Kontakt kommen, wird die Langzeitstabilität der entsprechenden Polymerschichtstruktur durch die erfindungsgemäße oleophop-hydrophobe Ausstattung verlängert.

Die Erfindung wird nachfolgend in Ausführungsbeispielen anhand der zugehörigen Zeichnungen erläutert. Es zeigen:
- Figur 1 A-B: einen Stator (A) und einen Rotor (B) eines Elektromotors in einer perspektivischen Ansicht;
- Figur 2: eine schematisierte Schnittansicht einer Schichtstruktur auf Polymerbasis mit oleophob-hydrophober Oberfläche als Vergussmasse für einen Schaltring eines Stators gemäß einer ersten Ausgestaltung der Erfindung;
- Figur 3: eine schematisierte Schnittansicht einer Schichtstruktur auf Polymerbasis mit oleophob-hydrophober Oberfläche als Vergussmasse für einen Schaltring eines Stators gemäß einer zweiten Ausgestaltung der Erfindung; und
- Figur 4 A-E: Verfahrensstufen der Erzeugung einer erfindungsgemäßen Magnetverklebung für einen Rotor, wobei Fig. 4 F eine Ansicht nach Schnitt X-X nach Fig. 4 E ist.

Nachfolgend soll die vorliegende Erfindung am Beispiel einer Vergussmasse für einen Stator sowie für eine Magnetverklebung für einen Rotor eines Elektromotors näher erläutert werden. Es versteht sich jedoch, dass die erfindungsgemäße Schichtanordnung auf Polymerbasis mit oleophob-hydrophober Oberfläche auch in Zusammenhang mit anderen Maschinen oder Komponenten Einsatz finden kann.

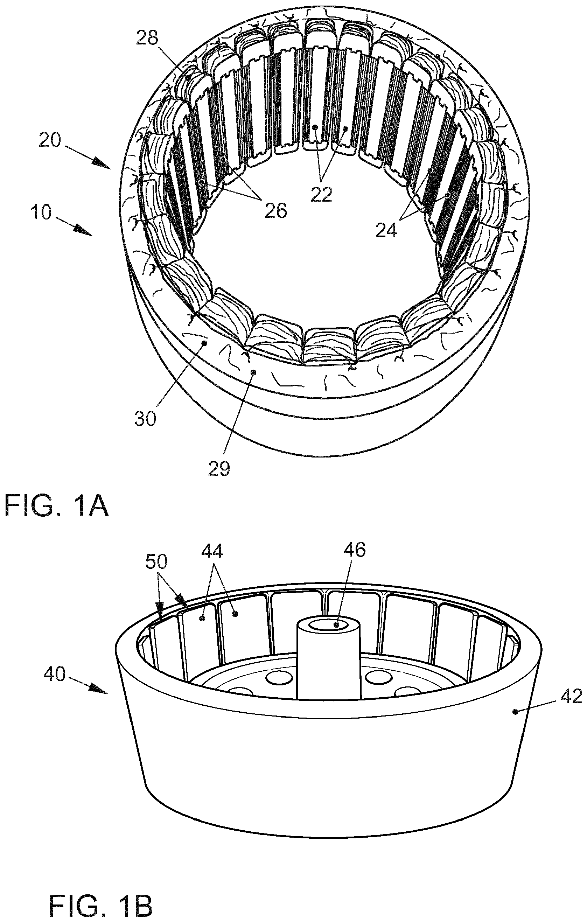

Die prinzipiellen Komponenten eines insgesamt mit 10 bezeichneten Elektromotors werden anhand der Figuren 1A und 1 B erläutert, wobei Figur 1A einen Stator 20 und Figur 1B einen Rotor 40 zeigt.

Der in Figur 1A gezeigte Stator 20 weist einen Statorkern 22 auf, welcher in der Regel aus einem laminierten Blechpaket einer Vielzahl von hier vertikal gestapelten Einzelblechen, beispielsweise aus Stahl, besteht. Der Statorkern (das Statorblechpaket) 22 weist in regelmäßigen Abständen an seinem inneren Umfang vertikal verlaufende Nuten 24 auf. In und um die Nuten 24 verlaufen Wicklungen 26, die typischerweise,aus durchgehend islolierbeschichtetem Kupferdraht hergestellt sind. Ein über den Statorkern 22 herausragender Teil der Wicklungen 26 wird als Wickelkopf 28 bezeichnet.

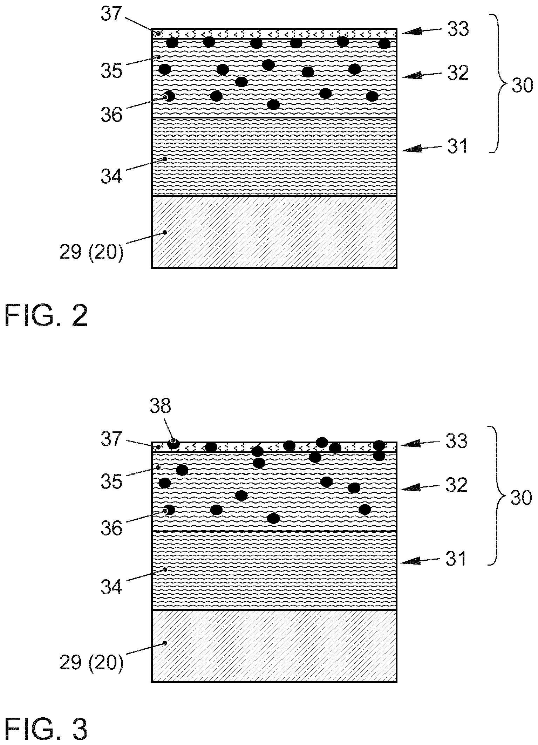

Die Teilwicklungen 26 sind durch einen, in Figur 1A nicht sichtbaren Schaltring 29 miteinander elektrisch verschaltet. Beispielsweise ist bei einem dreiphasigem Elektromotor jede dritte Teilwicklung der hier insgesamt 24 Teilwicklungen über ein gemeinsames Schaltringsegment miteinander verschaltet, so dass in diesem Beispiel ein Schaltring 29 drei Segmente aufweist, die jeweils acht Teilwicklungen elektrisch miteinander verschalten. Zur elektrischen Isolierung des hier nicht sichtbaren Schaltrings 29 ist der obere äußere Bereich des Wickelkopfs 28 sowie des Schaltrings in eine Vergussmasse 30 auf Polymerbasis eingebettet, die in Form der erfindungsgemäßen Schichtstruktur mit oleophob-hydrophober Oberflächenausrüstung ausgebildet ist. Diese wird weiter unten anhand der Figuren 2 und 3 näher erläutert.

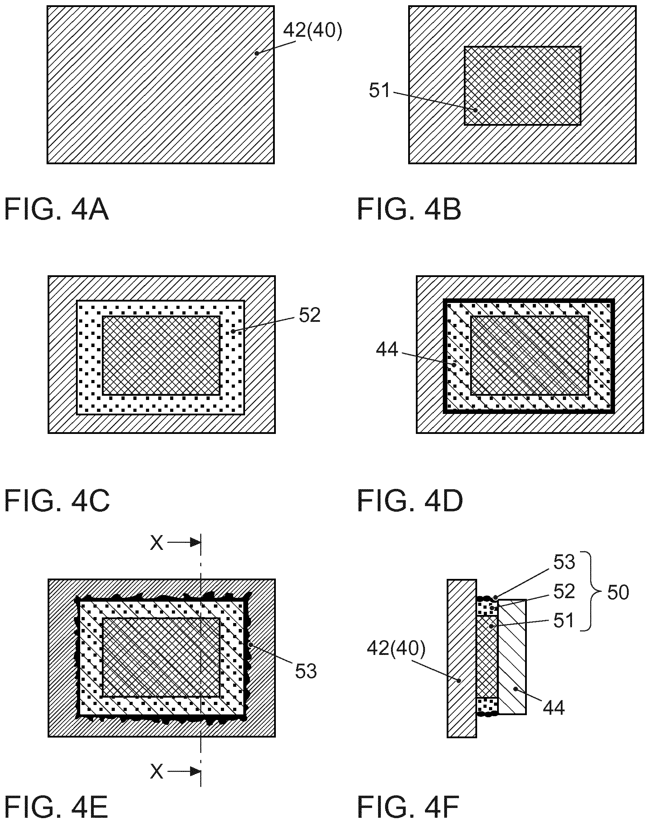

Der in Figur 1B dargestellte Rotor 40 weist einen Rotorkern (Blechpaket) 42 sowie eine Vielzahl von Permanentmagneten 44 auf, die mit dem Rotorkern 42 verklebt sind. In der dargestellten beispielhaften Ausführung ist der Rotor 40 als Außenläufer ausgebildet, so dass die Magnete 44 an seiner inneren Umfangsfläche angeordnet sind. In diesem Fall befindet sich der Stator 20 im montierten Zustand im Inneren des Rotors 40, so dass sich zwischen der Wicklung 26 des Stators 20 und den Magneten 44 des Rotors 40 ein Luftspalt befindet. In alternativer Ausbildung kann der Rotor 40 auch als Innenläufer ausgebildet sein, wobei die Magnete 44 an dem äußeren Umfang des Rotorkerns 42 angeordnet sind. Der Rotor 40 weist ferner einen zentralen Schaft 46 auf, der mit einer hier nicht dargestellten Antriebswelle drehfest verbunden ist. Die Magnete 44 sind mit dem Rotorkern 42 über Verklebungen 50 verbunden, welche in Form einer erfindungsgemäßen Schichtstruktur mit oleophob-hydrophober Oberflächenausrüstung ausgebildet sind, die anhand der Figur 4 weiter unten erläutert wird.

Figur 2 zeigt eine schematische Schnittdarstellung eines Schaltrings 29 eines Stators 20 sowie einer hierauf aufgebrachten Vergussmasse 30 in Form einer erfindungsgemäßen Schichtstruktur. Die erfindungemäße Schichtstruktur 30 umfasst drei Schichten 31, 32, 33.

Die erste Schicht 31 grenzt an die Oberfläche des Schaltrings 29. Die erste Schicht 31 umfasst ein Polymer 34 oder besteht aus einem solchen. Das Polymer 34 ist insbesondere ein Silikon, bevorzugt ein Methylpolysiloxan-Kautschuk, beispielsweise ein Vinylmethyl-Polysiloxan-Kautschuk (VMQ) oder ein Phenylvinylmethyl-Polysiloxan-Kautschuk (PVMQ). Beispielsweise kann hier das unter der Marke RAKU-SIL^{®} 10-S 13/9 (Fa. Rampf Giessharze GmbH & Co. KG) vertriebene Silikonelastomer verwendet werden. Es werden bevorzugt additionsvernetzende Silikon-Kautschuke verwendet, da das bei kondensationsvernetzenden Kautschuken abspaltende Produktwasser bei der Herstellung nicht durch die darüberliegende Schichten entweichen kann. Andernfalls müsste bei kondensationsvernetzenden Kautschuken die Schicht 31 erst vollständig ausgehärtet werden, ehe die nachfolgende Schicht aufgebracht wird. Die Dicke der ersten Schicht 31 ist abhängig von dem komplett einzugießenden Bauteil, insbesondere abhängig von der Höhe des Schaltrings 29. Typischerweise beträgt die Dicke mehrere Millimeter, beispielsweise 5 mm.

Die zweite Schicht 32, die auf der Oberfläche der ersten Schicht 31 angeordnet ist, umfasst ebenfalls ein Polymer 35 sowie Partikel 36 eines Fluorpolymers. Das Polymer 35 der zweiten Schicht 32 ist vorzugsweise das gleiche Material wie das Polymer 34 der ersten Schicht 31, also beispielsweise ein Silikon. Alternativ kann die zweite Schicht 32 einen Haftvermittler beziehungsweise organischen Binder umfassen. Bevorzugte Materialien sind zum Beispiel die von der Firma Klüber vertriebenen Produkte der Reihe Klübertop^{®} (Klübertop^{®} TP 16-812, Klübertop^{®} TP 22, Klübertop^{®} TP 27, Klübertop^{®} TP 27-1310, Klübertop^{®} TP 28-1311 und Klübertop^{®} TP 31,1310). Als Partikel 36 werden PTFE- oder PVDF-Partikel eingesetzt (z.B. PTFE-Partikel: Pro 47 PP, Partikelgröße 0,2-6 µm, Fa. SAB Berschneider; WINIX^{®} 6700, Partikelgröße 0,12-4 µm, Fa. WINIX GmbH; PVDF-Partikel: Hylar^{®} 301 F, Fa. Solvay Plastics, MCT LS877 PTFE Gleitlack von Microgleit). Der Anteil der Partikel 36 liegt im Bereich von beispielsweise 1 bis 40 Gew.-%, insbesondere im Bereich von 5 bis 30 Gew.-%, speziell bei 10 bis 20 Gew.-% bezogen auf die Masse der Schicht 32. Die Dicke der zweiten Schicht 32 beträgt beispielsweise 0,05 bis 5 mm, insbesondere 0,1 bis 2 mm, vorzugsweise 0,1 bis 1 mm.

Die Schichtstruktur 30 weist ferner eine äußere, an die zweite Schicht 32 angrenzende Schicht 33 auf. Die äußere Schicht 33 umfasst eine Fluorcarbonverbindung 37, welche im vorliegenden Beispiel polare und/oder ionische Gruppen aufweist. Vorzugsweise handelt es sich bei der Fluorcarbonverbindung 37 der dritten Schicht 33 um ein Fluoralkylsiloxan wie es beispielsweise von der Firma Evonik unter den Markennamen Dynasylan^{®} F8261, Dynasylan^{®}F8263, Dynasylan^{®}F8815, Dynasylan^{®} Sivo und Dynasylan^{®}Sivo Clear sowie Dynasylan^{®}Sivo Clear EC vertrieben wird. Alternativ ist auch die Verwendung eines ionischen Fluortensids als Fluorcarbonverbindung 37 bevorzugt, insbesondere eines teilfluorierten C2- bis C40-Phosphorsäurealkylester. Vorzugsweise wird als ein solcher Vertreter ein Reaktionsprodukt aus 1 H, 1 H, 2H, 2H, Perfluor-1-oktanol und Phosphorpentoxid oder einem Salz von diesem Produkt, insbesondere ein Ammoniumsalz verwendet. Dieses enthält vorzugsweise ein Bindemittel und/oder Netzmittel auf Acrylatbasis. Ein entsprechendes Produkt ist unter der Markenbezeichnung Capstone^{®} FS-63 (Fa. DuPont) erhältlich. Alternativ können die Produkte Capstone^{®} FS-81, Dusgon^{®} 6005 oder Zonyl^{®} FSP (alle von DuPont); Dyneon^{®} TF 5032, Dyneon^{®}TF 5041 Z, Dyneon^{®} TF 5050 Z, Dyneon^{®} TF 5060 GZ, Dyneon^{®} TF 5070 GZ (alle von der Firma 3M) sowie die Produkte Hyflon^{®} D5220X und Hyflon^{®} XPH 5510 der Firma Solvayverwendet werden. Die Dicke der dritten Schicht 33 beträgt in diesem Ausführungsbeispiel beispielsweise 0,01 bis 1 mm, insbesondere 0,05 bis 0,5 mm.

Eine Vergussmasse 30 nach einer zweiten vorteilhaften Ausgestaltung der Erfindung ist in Figur 3 dargestellt. Dabei sind übereinstimmende Elemente mit den gleichen Bezugszeichen wie in Figur 2 bezeichnet. Die Vergussmasse 30 nach Figur 3 unterscheidet sich von der in Figur 2 dargestellten dadurch, dass in der äußeren Schicht 33 (ebenso wie in der zweiten Schicht 32) Partikel 38 eines Fluorpolymers verteilt angeordnet sind. Dabei kann es sich bei dem Fluorpolymer der Partikel 38 der äußeren Schicht 33 um das gleiche Material wie das der Partikel 36 der zweiten Schicht 32 handeln, insbesondere um PTFE oder PVDF. Der Anteil der Partikel 36 der Schicht 33 liegt im Bereich von beispielsweise 1 bis 40 Gew.-%, insbesondere bei 5 bis 30 Gew.-%, speziell bei 10 bis 20 Gew.-% bezogen auf die Gesamtmasse der Schicht 33. Die Dicke der dritten Schicht 33 ist tendenziell etwas größer als die partikelfreie Schicht 33 aus Figur 2. Die Dicke der Schicht 33 beträgt in diesem Ausführungsbeispiel beispielsweise 0,01 bis 3 mm, insbesondere 0,05 bis 2 mm, speziell 0,1 bis 1 mm.

Die erfindungsgemäße Schichtstruktur 30 nach Figur 3 kann hergestellt werden, indem zunächst der Polymerreaktionsansatz für die Schichten 31 und 32 nach Herstellerangaben zubereitet wird. Beispielsweise werden bei dem Produkt RAKU-SIL^{®} 10-S 13/9 die beiden , Reaktionskomponenten im Verhältnis 1:1 gemischt. Für die zweite Schicht 32 werden dieser Mischung die Fluorpolymerpartikel (z.B. 10 Gew.-% PTFE-Pulver) zugemischt. Zur Herstellung der ersten Schicht 31 wird der entsprechende PTFE-freie Ansatz auf die zu beschichtende Oberfläche des Stators 20 aufgetragen. Anschließend wird die Mischung des Silikonkautschuks 35 und der PTFE-Partikel 36 auf die erste Schicht 31 aufgetragen, um die zweite Schicht 32 zu erzeugen. Das Auftragen beider Massen kann beispielsweise durch Aufstreichen erfolgen. Dabei kann die zweite Schicht 32 aufgetragen werden, bevor die erste Schicht 31 ausgehärtet ist. Die Aushärtung der Schichten 31 und 32 erfolgt nach Herstellerangaben und bauteilabhängig unter Wärmezufuhr bei mindestens 150 °C für mindestens 10 min, insbesondere für 30 min.

Anschließend wird ein Beschichtungsmittel für die äußere Schicht 33 hergestellt, indem die Fluorcarbonverbindung 37 in einem Lösungs- oder Trägermittel, beispielsweise Wasser, Ethanol und/oder Isopropanol gelöst oder suspensiert wird. Vorzugsweise wird zudem ein Bindemittel auf Akrylatbasis zugefügt. Alternativ kann ein Produkt verwendet werden, bei dem die Fluorcarbonverbindung 37 bereits in einem Lösungsmittel/Bindemittel vorliegt (z.B. Capstone^{®} FS-63, Fa. DuPont). In diesen Ansatz werden die Fluorpolymerpartikel 38 eingerührt, wobei überraschenderweise eine klare Lösung entsteht, was für eine Lösung oder zumindest eine sehr gute Dispergierung der Partikel 38 spricht. Diese Mischung kann beispielsweise als Aerosol auf die zweite Schicht 32 aufgetragen werden. Alternativ ist auch ein Aufstreichen oder Tauchbeschichtung möglich. Anschließend wird die Schicht 33 getrocknet, wozu optional eine Wärmezufuhr erfolgen kann. Hierbei verdampft beziehungsweise depolymerisiert das Lösungsmittel bzw. Netzmittel, wobei es wiederum zu einem Ausfällen des Fluorpolymers (PTFE/PVDF) und somit zu erneuter Partikelentstehung kommt. Die Partikel 38 sind im Ergebnis von einem Film der polaren und/oder ionischen Fluorcarbonverbindung 37 umhüllt.

Anhand der Figur 4A bis 4F wird die Herstellung sowie der Aufbau einer Magnetklebung 50 in Form der erfindungsgemäßen Schichtstruktur erläutert. Figur 4A zeigt die Oberfläche eines Rotors 40 beziehungsweise seines Rotorkerns (Blechpaket) 42, auf welche ein Magnet 44 aufgeklebt werden soll. Auf diese Oberfläche wird eine erste Schicht 51 eines Polymers aufgebracht (Figur 4B), wobei dieses hier ein Silikonkleber ist, insbesondere ein additionsvernetztes Silikonharz. Beispielsweise kann hier das thermisch härtende, unter der Handelsbezeichnung Semicosil^{®} 988/1 K (Fa. Wacker Chemie AG) erhältliche Produkt Einsatz finden.

Rund um den umlaufenden Randbereich der Silikonkleberschicht 51 wird eine zweite Schicht 52 aufgebracht, welche ebenfalls ein Polymer und zusätzlich in dem Polymer verteilte Partikel eines Fluorpolymers wie PTFE oder PVDF aufweist (Figur 4C). Bei dem Polymer kann es sich um das gleiche Silikonklebematerial handeln wie für die erste Schicht 51. Desgleichen können als PTFE- oder PVDF-Partikel die gleichen wie im Zusammenhang mit den Figuren 2 und 3 verwendeten Partikel Einsatz finden. Optional kann die zweite Schicht 52 auch mit einer geringfügigen Überlappung über die erste Sicht 51 aufgebracht werden.

Anschließend wird der Magnet 44 (hier transparent dargestellt) auf die aus den Schichten 51 und 52 bestehende Klebefläche aufgelegt, wobei Abstandshalter (z.B. ein Rahmen entsprechender Dicke) zum Einsatz kommen können, um eine gleichmäßige und vorbestimmte Dicke der Klebeschicht zu gewährleisten (Figur 4D). Die Ränder des Magneten 44 verlaufen vorzugsweise bündig mit dem äußeren Rand der Schicht 52. Die Aushärtung des Silikonklebers erfolgt vorzugsweise unter Wärmezufuhr. Es kommt zu einer stabilen Klebeverbindung zwischen dem Magnet 44 und dem Silikonkleber.

Anschließend wird eine dritte Schicht 53 auf den äußeren Randbereich der zweiten Schicht 52 aufgebracht (Figur 4E). Die dritte Schicht 53 kann grundsätzlich die gleichen Inhaltsstoffe wie die dritte Schicht 33 der Vergussmassen nach den Figuren 2 und 3 aufweisen. Auch hier wird die dritte Schicht 53 vorzugsweise als Aerosol aufgesprüht und anschließend getrocknet. Der Aufbau der Schichtstruktur 50 für die Magnetverklebung in einer Schnittansicht nach Schnitt X-X gemäß Figur 4E ist in Figur 4F gezeigt.

In sämtlichen Ausführungen gemäß den Figuren 2 bis 4 wird durch die äußere Schicht 33 bzw. 53 eine oleophobe und zugleich hydrophobe Sperrschicht sowohl für Öle als auch für Wasser erzielt. Die Olephobie ist über eine verringerte Ölaufnahme der beschichteten Materialien im Vergleich zu Beschichtungen, ohne die äußere Schicht 33 bzw. 53 nachweisbar. Beispielsweise kann dies durch die Änderung der Shore-Härte oder durch Erfassung der Volumenänderung infolge von Quellung gemessen werden. Zusätzlich wirkt die äußere Schicht 33 bzw. 53 als dielektrische Barriereschicht. Zudem zeichnen sich die Schichtstrukturen 30 beziehungsweise 50 durch eine hohe mechanische Stabilität aus.

### Bezugszeichenliste

- 10: elektrische Maschine / Elektromotor

- 20: Stator 22 Statorkern (Blechpaket)
- 24: Nut
- 26: Wicklung
- 28: Wickelkopf
- 29: Schaltring

- 30: Schichtstruktur / Vergussmasse
- 31: erste Schicht / Polymerschicht
- 32: zweite Schicht / Polymer-Fluorpolymerpartikel-Schicht
- 33: äußere Schicht / Fluorcarbon-Schicht
- 34: Polymer
- 35: Polymer
- 36: Fluorpolymerpartikel
- 37: Fluortensid

- 40: Rotor
- 42: Rotorkern (Blechpaket)
- 44: Magnete
- 46: Schaft

- 50: Schichtstruktur / Verklebung
- 51: erste Schicht
- 52: zweite Schicht
- 53: äußere Schicht

## Patentansprüche

1. Schichtstruktur (30, 50) auf Polymerbasis mit oleophob-hydrophober Oberfläche zur Beschichtung, Abdichtung und/oder zum Verbinden technischer Baugruppen oder Teilen von diesen, umfassend
- eine erste, ein Polymer (34) umfassende Schicht (31, 51),
- eine zweite, an die erste Schicht (31, 51) angrenzende Schicht (32, 52), umfassend ein Polymer (35) sowie, in dem Polymer verteilte, ein Fluorpolymer umfassende Partikel (36) sowie
- eine äußere, an die zweite Schicht (32, 52) angrenzende Schicht (33, 53), die eine Fluorcarbonverbindung (37) mit zumindest einer funktionellen Gruppe umfasst, und optional in der Fluorcarbonverbindung (37) verteilte, ein Fluorpolymer umfassende Partikel (38) umfasst.

2. Schichtstruktur (30, 50) nach Anspruch 1, wobei das Polymer (34, 35) der ersten Schicht (31, 51) und/oder der zweiten Schicht (32, 52) ein Thermoplast, ein Elastomer, ein thermoplastisches Elastomer oder ein Duroplast umfasst.

3. Schichtstruktur (30, 50) nach Anspruch 1, wobei das Polymer (34, 35) der ersten Schicht (31, 51) und/oder der zweiten Schicht (32, 52) ein Silikon ist.

4. Schichtstruktur (30, 50) nach einem der Ansprüche 1 bis 3, wobei die Fluorcarbonverbindung (37) der äußeren Schicht (33, 53) ein Fluoralkylsiloxan umfasst.

5. Schichtstruktur (30, 50) nach Anspruch 4, wobei das Fluoralkylsiloxan ein Tridecafluorooctyltriethoxysilan umfasst.

6. Schichtstruktur (30, 50) nach einem der Ansprüche 1 bis 3, wobei die mindestens eine funktionelle Gruppe eine polare und/oder ionische Gruppe ist.

7. Schichtstruktur (30, 50) nach Anspruch 1 und 6, wobei die Fluorcarbonverbindung (37) der äußeren Schicht (33, 53) ein Fluortensid umfasst, insbesondere ein ionisches Fluortensid.

8. Schichtstruktur (30, 50) nach Anspruch 7, wobei das Fluortensid ausgewählt ist aus der Gruppe umfassend teil- oder perfluorierte Phosphorsäureester, umfassend Mono-, Di- und Triester der Phosphorsäure und Di- und Triphosphorsäureester; teil- oder perfluorierte Phosphonsäureester, umfassend Mono- und Diester der Phosphonsäure, und Di- und Triphosphonsäureester; teil- oder perfluorierte Sulfonsäuren; teil- oder perfluorierte Schwefelsäureester; teil- oder perfluorierte Carbonsäuren; sowie Oligomere oder Telomere, Salze und Mischungen der vorgenannten Verbindungen.

9. Schichtstruktur (30, 50) nach Anspruch 7 oder 8, wobei das Fluortensid ein teilfluorierter C₂- bis C₄₀-Phosphorsäurealkylester ist, insbesondere ein Reaktionsprodukt aus 1H,1H,2H,2H-Perfluor-1-oktanol und Phosphorpentoxid ist oder ein Salz von diesem.

10. Schichtstruktur (30, 50) nach einem der vorhergehenden Ansprüche, wobei die äußere Schicht (33, 53) ein Netzmittel umfasst, insbesondere ein Acrylat.

11. Schichtstruktur (30, 50) nach einem der vorhergehenden Ansprüche, wobei das Fluorpolymer der Partikel (36, 38) der zweiten Schicht (32, 52) und/oder der äußeren Schicht (33, 53) unabhängig voneinander ein teil- oder perfluoriertes Kohlenwasserstoffpolymer ist, vorzugsweise ausgewählt aus Polytetrafluorethylen (PTFE), Polyvinylidenfluorid (PVDF) oder deren Mischungen.

12. Schichtstruktur (30, 50) nach einem der Ansprüche 1 bis 11, wobei das Polymer (34, 35) der ersten Schicht (31, 51) und/oder der zweiten Schicht (32, 52) ein Silikonkautschuk, insbesondere aus der Gruppe der Methylpoly-siloxan-Kautschuke (MQ) ist, vorzugsweise ausgewählt aus Vinylmethyl-Polysiloxan-Kautschuken (VMQ), Phenylvinylmethyl-Polysiloxan-Kautschuken (PVMQ) oder Mischungen von diesen.

13. Schichtstruktur (30, 50) nach einem der Ansprüche 1 bis 11, wobei das Polymer (34, 35) der ersten Schicht (31, 51) und/oder der zweiten Schicht (32, 52) ein Silikonkleber ist, insbesondere ein additionsvernetzes Silikonharz.

14. Schichtstruktur (30, 50) nach einem der vorhergehenden Ansprüche, wobei die erste Schicht (31, 51) einen Füllstoff umfasst, insbesondere Partikel, Kugeln oder Hohlkugeln aus Quarz, Glas, Aluminiumoxid, Bornitrit, Graphit oder Metall.

15. Elektrische Maschine (10), umfassend einen Stator (20) und einen Rotor (40), wobei der Stator (20) und/oder der Rotor (40) eine Wicklung (26) und/oder Permanentmagnete (44) umfasst, und wobei im Bereich einer Wicklung (26) und/oder eines Schaltrings (29) und/oder als Verklebung der Permanentmagnete (44) eine oleophob-hydrophobe Schichtstruktur (30, 50) nach einem der Ansprüche 1 bis 14 angeordnet ist.

## Claims

1. Polymer-based layer structure (30, 50) having an oleophobic-hydrophobic surface for coating, sealing and/or bonding technical assemblies or parts thereof, comprising
- a first layer (31, 51) comprising a polymer (34),
- a second layer (32, 52) adjoining the first layer (31, 51) and comprising a polymer (35) and particles (36) that comprise a fluoropolymer and are distributed within the polymer, and
- an outer layer (33, 53) that adjoins the second layer (32, 52) and comprises a fluorocarbon compound (37) having at least one functional group, and optionally particles (38) that comprise a fluoropolymer and are distributed in the fluorocarbon compound (37).

2. Layer structure (30, 50) according to Claim 1, wherein the polymer (34, 35) of the first layer (31, 51) and/or the second layer (32, 52) comprises a thermoplastic, an elastomer, a thermoplastic elastomer or a thermoset.

3. Layer structure (30, 50) according to Claim 1, wherein the polymer (34, 35) of the first layer (31, 51) and/or the second layer (32, 52) is a silicone.

4. Layer structure (30, 50) according to any of Claims 1 to 3, wherein the fluorocarbon compound (37) of the outer layer (33, 53) comprises a fluoroalkyl-siloxane.

5. Layer structure (30, 50) according to Claim 4, wherein the fluoroalkylsiloxane comprises a tridecafluorooctyltriethoxysilane.

6. Layer structure (30, 50) according to any of Claims 1 to 3, wherein the at least one functional group is a polar and/or ionic group.

7. Layer structure (30, 50) according to Claims 1 and 6, wherein the fluorocarbon compound (37) of the outer layer (33, 53) comprises a fluorosurfactant, especially an ionic fluorosurfactant.

8. Layer structure (30, 50) according to Claim 7, wherein the fluorosurfactant is selected from the group comprising part- or perfluorinated phosphoric esters comprising mono-, di- and triesters of phosphoric acid and di- and triphosphoric esters; part- or perfluorinated phosphonic esters comprising mono- and diesters of phosphonic acid, and di- and triphosphoric esters; part- or perfluorinated sulphonic acids; part- or perfluorinated sulphuric esters; - or perfluorinated carboxylic acids; and oligomers or telomers, salts and mixtures of the aforementioned compounds.

9. Layer structure (30, 50) according to Claim 7 or 8, wherein the fluorosurfactant is a part-fluorinated C₂- to C₄₀-alkyl phosphate, especially a reaction product formed from 1H,1H,2H,2H-perfluoro-1-octanol and phosphorus pentoxide or a salt thereof.

10. Layer structure (30, 50) according to any of the preceding claims, wherein the outer layer (33, 53) comprises a wetting agent, especially an acrylate.

11. Layer structure (30, 50) according to any of the preceding claims, wherein the fluoropolymer of the particles (36, 38) of the second layer (32, 52) and/or the outer layer (33, 53) is independently a part- or perfluorinated hydrocarbon polymer, preferably selected from polytetrafluoroethylene (PTFE), polyvinylidene fluoride (PVDF) or mixtures thereof.

12. Layer structure (30, 50) according to any of Claims 1 to 11, wherein the polymer (34, 35) of the first layer (31, 51) and/or the second layer (32, 52) is a silicone rubber, especially from the group of the methylpolysiloxane rubbers (MQ), preferably selected from vinylmethylpolysiloxane rubbers (VMQ), phenylvinylmethylpolysiloxane rubbers (PVMQ) or mixtures of these.

13. Layer structure (30, 50) according to any of Claims 1 to 11, wherein the polymer (34, 35) of the first layer (31, 51) and/or the second layer (32, 52) is a silicone adhesive, especially an addition-crosslinked silicone resin.

14. Layer structure (30, 50) according to any of the preceding claims, wherein the first layer (31, 51) comprises a filler, especially particles, beads or hollow beads composed of quartz, glass, aluminium oxide, boron nitrite, graphite or metal.

15. Electrical machine (10) comprising a stator (20) and a rotor (40), wherein the stator (20) and/or the rotor (40) comprises a winding (26) and/or permanent magnets (44), and wherein an oleophobic-hydrophobic layer structure (30, 50) according to any of Claims 1 to 14 is disposed in the region of a winding (26) and/or of a switch ring (29) and/or as a bonding means for the permanent magnets (44).

## Revendications

1. Structure stratifiée (30, 50) à base de polymères, ayant une surface oléophobe-hydrophobe, pour conduction, étanchéification et/ou assemblage de composants techniques ou de pièces de ces derniers, comprenant :
- une première couche (31, 51) comprenant un polymère (34),
- une deuxième couche (32, 52), adjacente à la première couche (31, 51), comprenant un polymère (35) ainsi que des particules (36) comprenant un polymère fluoré, réparties dans le polymère, ainsi que
- une couche extérieure (33, 53), adjacente à la deuxième couche (32, 52), qui comprend un composé fluorocarboné (37) comportant au moins un groupe fonctionnel, et qui comprend en option des particules (38) comprenant un polymère fluoré, réparties dans le composé fluorocarboné (37).

2. Structure stratifiée (30, 50) selon la revendication 1, dans laquelle le polymère (34, 35) de la première couche (31, 51) et/ou de la deuxième couche (32, 52) comprend un thermoplastique, un élastomère, un élastomère thermoplastique ou un thermodurcissable.

3. Structure stratifiée (30, 50) selon la revendication 1, dans laquelle le polymère (34, 35) de la première couche (31, 51) et/ou de la deuxième couche (32, 52) est une silicone.

4. Structure stratifiée (30, 50) selon l'une des revendications 1 à 3, dans laquelle le composé fluorocarboné (37) de la couche extérieure (33, 53) comprend un fluoralkylsiloxane.

5. Structure stratifiée (30, 50) selon la revendication 4, dans laquelle le fluoralkylsiloxane comprend un tridécafluorooctyltriéthoxysilane.

6. Structure stratifiée (30, 50) selon l'une des revendications 1 à 3, dans laquelle la ou les groupes fonctionnels sont des groupes polaires et/ou ioniques.

7. Structure stratifiée (30, 50) selon les revendications 1 et 6, dans laquelle le composé fluorocarboné (37) de la couche extérieure (33, 53) comprend un tensioactif fluoré, en particulier un tensioactif fluoré ionique.

8. Structure stratifiée (30, 50) selon la revendication 7, dans laquelle le tensioactif fluoré est choisi dans le groupe comprenant les esters partiellement fluorés ou perfluorés de l'acide phosphorique, comprenant les mono-, les di- et les triesters de l'acide phosphorique et les esters de l'acide di- et triphosphorique ; les esters de l'acide phosphonique partiellement fluorés ou perfluorés, comprenant les mono- et les diesters de l'acide phosphonique, et les esters de l'acide di- et triphosphorique ; les acides sulfoniques partiellement fluorés ou perfluorés ; les esters de l'acide sulfurique partiellement fluorés ou perfluorés ; les acides carboxyliques - ou perfluorés ; ainsi que les oligomères ou les télomères, les sels et mélanges des composés mentionnés ci-dessus.

9. Structure stratifiée (30, 50) selon la revendication 7 ou 8, dans laquelle le tensioactif fluoré est un ester alkylique en C₂ à C₄₀ partiellement fluoré de l'acide phosphorique, en particulier un produit de la réaction du 1H,1H,2H,2H-perfluoro-1-octanol et du pentoxyde de phosphore, ou un sel de celui-ci.

10. Structure stratifiée (30, 50) selon l'une des revendications précédentes, dans laquelle la couche extérieure (33, 53) comprend un mouillant, en particulier un acrylate.

11. Structure stratifiée (30, 50) selon l'une des revendications précédentes, dans laquelle le polymère fluoré des particules (36, 38) de la deuxième couche (32, 52) et/ou de la couche extérieure (33, 53) est, indépendamment l'un de l'autre, un polymère hydrocarboné partiellement fluoré ou perfluoré, choisi de préférence parmi le polytétrafluoréthylène (PTFE), le poly(fluorure de vinylidène) (PVDF) ou les mélanges de ceux-ci.

12. Structure stratifiée (30, 50) selon l'une des revendications 1 à 11, dans laquelle le polymère (34, 35) de la première couche (31, 51) et/ou de la deuxième couche (32, 52) est un caoutchouc de silicone, en particulier du groupe des caoutchoucs de méthylpolysiloxane (MQ), de préférence choisi parmi les caoutchoucs de vinylméthyl-polysiloxane (VMQ), les caoutchoucs de phénylvinylméthyl-polysiloxane (PVMQ) ou les mélanges de ceux-ci.

13. Structure stratifiée (30, 50) selon l'une des revendications 1 à 11, dans laquelle le polymère (34, 35) de la première couche (31, 51) et/ou de la deuxième couche (32, 52) est un adhésif siliconé, en particulier une résine de silicone réticulée par addition.

14. Structure stratifiée (30, 50) selon l'une des revendications précédentes, dans laquelle la première couche (31, 51) comprend une charge, en particulier des particules, des billes ou des billes creuses de quartz, de verre, d'oxyde d'aluminium, de nitrite de bore, de graphite ou de métal.

15. Machine électrique (10) comprenant un stator (20) et un rotor (40), dans laquelle le stator (20) et/ou le rotor (40) comprennent un enroulement (26) et/ou des aimants permanents (44), et dans laquelle une structure stratifiée oléophobe-hydrophobe (30, 50) selon l'une des revendications 1 à 14 est disposée dans la zone d'un enroulement (26) et/ou d'un anneau de commutation (29), et/ou en tant que collage des aimants permanents (44).
